(19) Europäisches Patentamt
European Patent Office
Office européen des brevets

(11) **EP 4 368 684 A2**

(12) **EUROPÄISCHE PATENTANMELDUNG**

(43) Veröffentlichungstag:
15.05.2024 Patentblatt 2024/20

(21) Anmeldenummer: 24154905.4

(22) Anmeldetag: **13.05.2015**

(51) Internationale Patentklassifikation (IPC):
***C09K 21/12*** *(2006.01)*

(52) Gemeinsame Patentklassifikation (CPC):
(C-Sets verfügbar)
**C08K 5/34924; C08G 18/3206; C08G 18/4854;
C08G 18/7664; C08K 3/22; C08K 5/092;
C08K 5/34922; C08K 5/42; C08K 5/523;
C09K 21/10; C09K 21/12;** C08K 2003/2206

(Forts.)

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **13.05.2014 EP 14168153**

(62) Dokumentnummer(n) der früheren Anmeldung(en)
nach Art. 76 EPÜ:
**15723011.1 / 3 143 062**

(71) Anmelder: **BASF SE
67056 Ludwigshafen am Rhein (DE)**

(72) Erfinder: **Henze, Oliver Steffen
49448 Lemfoerde (DE)**

(74) Vertreter: **Altmann Stößel Dick Patentanwälte
PartG mbB
Isartorplatz 1
80331 München (DE)**

Bemerkungen:
Diese Anmeldung ist am 31-01-2024 als
Teilanmeldung zu der unter INID-Code 62 erwähnten
Anmeldung eingereicht worden.

(54) **ZUBEREITUNG MIT GERINGEM PHENOLGEHALT AUF DER BASIS VON THERMOPLASTISCHEM POLYURETHAN**

(57) Der Gegenstand der Erfindung ist eine Zubereitung enthaltend A) thermoplastisches Polyurethan, das zumindest aus folgenden Einsatzstoffen hergestellt ist: (a) Isocyanat, (b) eine mit Isocyanat reaktive Substanz, sowie bevorzugt (c) Kettenverlängerer und/oder (d) Katalysator, und als weitere Einsatzstoffe (e) Zusatz und/oder Hilfsstoffe enthält, die entweder dem thermoplastischen Polyurethan bei der Herstellung zugegeben werden und somit in dem thermoplastischen Polyurethan enthalten sind und/oder in der Zubereitung zusätzlich zu dem thermoplastischen Polyurethan enthalten sind, wobei zumindest einer der Einsatzstoffe eine Phenoxygruppe oder ein Derivat der Phenoxygruppe und der Phenolgehalt der Zubereitung oder die Summe der Phenolgehalte des in der Zubereitung enthaltenen thermoplastischen Polyurethans und aller weiteren Einsatzstoffe kleiner 100 Gewichts-ppm ist sowie entsprechende Herstellungsverfahren und Verwendungen.

EP 4 368 684 A2

**(Forts. nächste Seite)**

(52)  Gemeinsame Patentklassifikation (CPC): (Forts.)

C-Sets
**C08K 3/22, C08L 75/08;**
**C08K 5/092, C08L 75/08;**
**C08K 5/34922, C08L 75/08;**
**C08K 5/34924, C08L 75/08;**
**C08K 5/42, C08L 75/08;**
**C08K 5/523, C08L 75/08**

**Beschreibung**

Gegenstand der Erfindung

Die Erfindung betrifft eine Zubereitung enthaltend ein thermoplastisches Polyurethan bei dem zumindest ein Einsatzstoff, bevorzugt ein Flammschutzmittel, eine Phenoxygruppe und/oder ein Derivat der Phenoxy-Gruppe enthält.

Stand der Technik

Thermoplastische Polyurethane mit Einsatzstoffen, bevorzugt Flammschutzmittel, die eine Phenoxygruppe und/oder entsprechende Derivate enthalten, sind bekannt. So beschreibt z.B. EP 0 617 079 B1 selbstverlöschende thermoplastische Polyurethane sowie Verfahren zu ihrer Herstellung. Gegenstand der WO 03/099 896 sind thermoplastische Polyurethane mit geringer Rauchgasentwicklung.

Eine Vielzahl der in den thermoplastischen Polyurethanen (TPU) eingesetzten Einsatzstoffe, insbesondere Flammschutzmittel, insbesondere solche die eine Phenoxygruppe und/oder entsprechende Derivate enthalten, entwickeln sehr hohe Phenolgehalte bzw. Derivate von Phenol. Das Phenol und seine Derivate, insbesondere das Phenol in dem thermoplastischen Polyurethan führen zu unangenehmer Geruchsbelastung, sind sehr toxisch und verstärken die Hydrolyse insbesondere von Polyestern, die in dem TPU, bevorzugt dem flammgeschützten TPU vorhanden sind oder die mit dem flammgeschützten TPU in direkten Kontakt kommen.

Aufgabe-Lösungs-Ansatz

Die Aufgabe der vorliegenden Erfindung bestand somit darin Zubereitungen enthaltend thermoplastisches Polyurethan (TPU) mit guter Flammschutzeigenschaft, guter mechanischer Eigenschaft, insbesondere geringem Abrieb, hoher Zugfestigkeit, hoher Reißdehnung, hoher Weiterreißfestigkeit, ausreichender Kälteflexibilitat, und dabei einer guten Mikrobenbeständigkeit, geringer Geruchsbelastung, geringer Toxizität und guter Hydrolysebeständigkeit, bereitzustellen, wobei die Hydrolysebeständigkeit insbesondere mit Polyestern gegeben sein soll, die im TPU vorhanden sind oder mit dem TPU in Kontakt kommen.

Weiterhin war Aufgabe der Erfindung geeignete Verfahren bereitzustellen, um diese Zubereitungen enthaltend das TPU herzustellen und solche TPU zu identifizieren, die in der Zubereitung diese vorteilhaften Eigenschaften zeigen und auch in Verbindung mit Polyestern nicht zu ungewünschter Hydrolyse führen sowie entsprechende Anwendungsgebiete zu identifizieren.

Detaillierte Beschreibung der Erfindung

Überraschend wurde festgestellt, dass Zubereitungen, die Einsatzstoffe enthalten, die zumindest eine Phenoxygruppe oder zumindest ein Derivat der Phenoxygruppe , bevorzugt zumindest eine Phenoxygruppe, bevorzugt ein Flammschutzmittel mit Phenoxygruppen enthalten und/oder thermoplastisches Polyurethan enthält, das mit Einsatzstoffen hergestellt wurde, die zumindest eine Phenoxygruppe oder zumindest ein Derivat der Phenoxygruppe, bevorzugt zumindest eine Phenoxygruppe, bevorzugt ein Flammschutzmittel mit Phenoxygruppen enthalten, vorteilhaft diese Aufgabe erfüllen wenn diese Einsatzstoffe nur einen geringen Phenolgehalt haben, bevorzugt wenn weiterhin die Basenzahl, die Säurezahl, bzw. die Basenzahl und die Säurezahl der Zubereitung oder des thermoplastischen Polyurethans und der Einsatzstoffe einen bestimmten, nachfolgend definierten Wert nicht übersteigt.

Unter Phenoxygruppe wird das Phenoxyradikal verstanden. Derivate der Phenoxygruppe sind solche Derivate des Phenoxyradikals, bei denen der Aromat des Phenoxyradikals mit weiteren Aryl- oder Alkylresten substituiert ist, wobei jeder Substituent am Aromat bevorzugt 1 bis 14 Kohlenstoffatome enthält, bevorzugt 1 bis 7 Kohlenstoffatome, weiter bevorzugt 1 bis 3 Kohlenstoffatome und besonders bevorzugt 1 Kohlenstoffatom und die Anzahl der Substituenten 1, 2 oder 3 ist.

Bevorzugte Derivate der Phenoxygruppe sind die Isopropylphenyl-, Kresyl- oder Xylenolgruppe bzw. die entsprechenden Radikale.

Ein erster Gegenstand der Erfindung ist daher eine Zubereitung 1 enthaltend

A) thermoplastisches Polyurethan das zumindest aus folgenden Einsatzstoffen hergestellt ist:
(a) Isocyanat, (b) mit Isocyanat reaktive Substanz, bevorzugt mit einem zahlenmittleren Molekulargewicht zwischen 500 g/mol und $100 \times 10^3$ g/mol, die bevorzugt ein Polyol ist, sowie in weiter bevorzugten Ausführungsformen (c) Kettenverlängerer, und/oder (d) Katalysator und
B) als weiteren Einsatzstoff oder als weitere Einsatzstoffe (e) Zusatzstoffe und/oder Hilfsstoffe,

d.h. mindestens ein Zusatz- und/oder Hilfsstoff,

der entweder dem thermoplastischen Polyurethan bei der Herstellung zugegeben wird und so- mit in dem thermoplastischen Polyurethan enthalten ist und/oder zusätzlich zu dem thermoplastischen Polyurethan in der Zubereitung enthalten ist, wobei zumindest ein Einsatzstoff eine Phenoxygruppe und/oder ein Derivat der Phenoxygruppe, bevorzugt eine Phenoxygruppe, enthält und der Phenolgehalt in der Zubereitung, in einer anderen bevorzugten Ausführungsform die Summe des Phenolgehalts des in der Zubereitung enthaltenen thermoplastischen Polyurethans und aller Einsatzstoffe, kleiner als 100 Gewichts- ppm ist, bevorzugt kleiner als 50 Gewichts-ppm, weiter bevorzugt kleiner als 20 Gewichts-ppm und besonders bevorzugt kleiner als 10 Gewichts-ppm.

Ein weiterer Gegenstand der Erfindung ist ein Verfahren zur Herstellung dieser Zubereitung und ihrer bevorzugten Ausführungsformen, wobei die Einsatzstoffe bei Temperaturen zwischen 160 °C und 250 °C zu der Zubereitung verarbeitet werden. Weitere Erfindungsgegenstande sind ein Extrusions-, Pulversinter und/oder Spritzguss-Teil, das aus der erfinderischen Zubereitung hergestellt ist und die Verwendung dieses Teiles für Anwendungen bei denen das Teil Polyester enthält und/oder in direktem Kontakt mit einem Polyester steht.

Die Vorteile der erfindungsgemäßen Zubereitung und der entsprechenden Herstellungsverfahren, liegen darin, dass die Zubereitung, verglichen mit herkömmlichen Materialien, verringerte Phenolgehalte und/oder verringerte Gehalte an Phenolderivaten aufweist, womit eine geringere Geruchsbelastung verbunden ist, die insbesondere in Innenräumen, ganz besonders bei Fahrzeugen eine Rolle spielt. Weiterhin geht mit dem geringeren Phenolgehalt und/oder verringertem Gehalt an Phenolderivaten, bevorzugt einem verringerten Phenolgehalt auch eine verringerte Toxizität einher. Zudem haben die erfindungsgemäßen Zubereitungen, enthaltend thermoplastisches Polyurethan eine bessere Hydrolysebeständigkeit, was ihnen insbesondere auch in Zubereitungen, die Polyester enthalten und/oder Zubereitungen die in Kontakt mit Polyestern stehen einen nicht unerheblichen Vorteil verschafft. Diese Vorteile sind in den bevorzugten Ausführungsformen überraschend stark ausgeprägt, wobei bei sehr guter Flammschutzeigenschaft gleichzeitig mit herkömmlichen Materialien vergleichbare mechanische Eigenschaften existieren.

Die Flammschutzeigenschaften werden mit dem UL 94V Test (ISBN 0-7629-0082-2, UL 94, Standard for Tests for Flammability of Plastic Materials for Parts in Devices and Appliances, Fifth Edition, October 29, 1996, 20 mm Vertical Burning Test; V-0, V-1, oder V-2 ermittelt. Besonders entscheidend für die Bewertung der Flammschutzeigenschaft ist die im UL 94V Vertikaltest ermittelte Einstufung. Bevorzugt werden solche Zubereitungen, bei denen das Ergebnis im UL 94 V Test zumindest V2 betragt, weiter bevorzugt V0, bevorzugt bei Dicken von 3,2 mm, bevorzugt von 1,5 mm, ganz besonders bevorzugt bei einer Dicke von 0,75 mm.

Thermoplastische Polyurethane, die in den erfindungsgemäßen Zubereitungen eingesetzt werden, sind grundsätzlich bekannt. Die Herstellung erfolgt durch Umsetzung von (a) Isocyanat mit (b) einer gegenüber Isocyanat reaktiven Verbindung, bevorzugt mit einem zahlenmittleren Molekulargewicht von $0,5 \times 10^3$ g /mol bis $100 \times 10^3$ g /mol, welche bevorzugt ein Polyol ist, und in bevorzugten Ausführungsformen (c) Kettenverlängerungsmitteln, bevorzugt mit einem Molekulargewicht von $0,05 \times 10^3$ g /mol bis $0,499 \times 10^3$ g /mol in anderen bevorzugten Ausführungsformen in Gegenwart von (d) Katalysatoren und/oder üblichen (e) Hilfsstoffen und/oder Zusatzstoffen.

Die Komponenten Isocyanat (a), gegenüber Isocyanaten reaktive Verbindungen (b), bevorzugt Polyol, sowie Kettenverlängerungsmittel (c) werden einzeln oder zusammen auch als Aufbaukomponenten angesprochen.

Die Aufbaukomponenten zusammen mit dem Katalysator (d) und/oder den Hilfsstoffen und/oder Zusatzstoffen (e), d.h. alle Stoffe, die der Zubereitung zugegeben werden, werden auch Einsatzstoffe genannt. Der Begriff Einsatzstoffe umfasst sowohl die Stoffe, die zur Herstellung des thermoplastischen Polyurethans verwendet werden, als auch die Stoffe, die dem thermoplastischen Polyurethan bei der Herstellung zugegeben aber nicht zum oder mit dem thermoplastischen Polyurethan reagieren, aber in diesem enthalten sind. Einsatzstoffe sind weiterhin alle Stoffe die in der Zubereitung neben dem thermoplastischen Polyurethan vorliegen bzw. bei der Herstellung der Zubereitung zu dem thermoplastischen Polyurethan zugegeben werden.

In bevorzugten Ausführungsformen der Zubereitung wird jeweils nur ein Einsatzstoff eines Typs neben anderen Einsatzstoffen eines anderen Typs, d.h. z.B. nur ein Isocyanat, nur ein Zusatzstoff etc., eingesetzt, in anderen bevorzugten Ausführungsformen werden jeweils mehrere Einsatzstoffe des gleichen Typs, d.h. mehrere Isocyanate, mehrere Zusatzstoffe etc., neben anderen Einsatzstoffen eingesetzt und in wieder anderen bevorzugten Ausführungsformen wird zumindest von einem Einsatzstoff nur eine bevorzugte Ausführungsform verwendet und zumindest bei einem zweiten Einsatzstoff mindestens zwei verschiedene bevorzugte Ausführungsformen eingesetzt. Ale denkbaren Kombinationen sind von der Erfindung umfasst.

Zur Einstellung von Harte und Schmelzindex der TPU werden die eingesetzten Mengen der Aufbaukomponenten (b) und (c) in ihren molaren Verhältnissen variiert, wobei die Härte und die Schmelzviskosität mit zunehmendem Gehalt an Kettenverlängerungsmittel (c) ansteigt, während der Schmelzindex abnimmt.

Zur Herstellung von weichen thermoplastischen Polyurethanen, z.B. solchen mit einer Shore A Harte von kleiner als 95, vorzugsweise von 95 bis 75 Shore A, weiter bevorzugt 94 bis 85 Shore A, können bevorzugt die im wesentlichen difunktionellen mit Isocyanten reaktiven Substanzen (b), bevorzugt mit einem Molekulargewicht zwischen 500 g/mol und $100 \times 10^3$ g/mol, bevorzugt Polyole und Kettenverlängerer (c) vorteilhafterweise in Molverhältnissen von 1:1 bis 1:5, vorzugsweise 1:1,5 bis 1:4,5 verwendet werden, so dass die resultierenden Mischungen aus den Aufbaukomponenten (b) und (c) ein Hydroxyläquivalentgewicht von größer als 200, und insbesondere von 230 bis 450, besitzen, während zur Herstellung von härteren TPU, z.B. solchen mit einer Harte Shore A von größer als 95, vorzugsweise von 55 Shore D bis 85 Shore D, die Molverhältnisse von (b):(c) im Bereich von 1:5,5 bis 1:15, vorzugsweise von 1:6 bis 1:12, liegen, so dass die erhaltenen Mischungen aus (b) und (c) ein Hydroxyläquivalentgewicht von 110 bis 200, vorzugsweise von 120 bis 180, aufweisen.

Zur Herstellung der TPU für die erfindungsgemäßen Zubereitung werden die Aufbaukomponenten (a), (b), in einer bevorzugten Ausführungsform auch (c), in bevorzugten Ausführungsformen in Gegenwart des Katalysators (d) und in anderen bevorzugten Ausführungsformen in Gegenwart der Hilfsmittel und/ oder Zusatzstoffe (e) in solchen Mengen zur Reaktion gebracht, dass das Äquivalenzverhältnis von NCO-Gruppen der Diisocyanate (a) zur Summe der Hydroxylgruppen der Komponenten (b) und (c) 0,95 bis 1,10:1, vorzugsweise 0,98 bis 1,08:1 und insbesondere ungefähr 1,0 bis 1,05:1 beträgt.

Vorzugsweise werden erfindungsgemäß Zubereitungen hergestellt, in denen das TPU ein gewichtsmittleres Molekulargewicht von mindestens $0, 1 \times 10^6$ g/mol, bevorzugt von mindestens $0,2 \times 10^6$ g/mol und insbesondere größer als $0,3 \times 10^6$ g/mol aufweist, Die Obergrenze für das gewichtsmittlere Molekulargewicht der TPU wird durch die Verarbeitbarkeit wie auch das gewünschte Eigenschaftsspektrum bestimmt, bevorzugt liegt das gewichtsmittlere Molekulargewicht der TPU in der Zubereitung nicht über $0,8 \times 10^6$ g/mol. Bei den vorstehend für das TPU wie auch für die Aufbaukomponenten (a) und (b) angegebenen gewichtsmittleren Molekulargewichten handelt es sich um die gemäß Beispiel 15 mittels Gelpermeationschromatographie (GPC) bestimmten Gewichtsmittel.

Dagegen werden die in dieser Schrift angegebenen zahlenmittleren Molekulargewichte gemäß Beispiel 16 bestimmt.

Als organische Isocyanate (a) werden für das thermoplastische Polyurethan in der Zubereitung bevorzugt aliphatische, cycloaliphatische, araliphatische und/oder aromatische Isocyanate eingesetzt, die bevorzugt zwei Isocynatgruppen enthalten, weiter bevorzugt Tri-, Tetra-, Penta-, Hexa-, Hepta- und/oder Oktamethylendiisocyanat, 2-Methylpentamethylen-diisocyanat-1,5, 2-Ethyl-butylen-diisocyanat-1,4, Pentamethylen-diisocyanat-1,5, Butylen-diisocyanat-1,4, 1-Isocyanato-3,3,5-trimethyl-5-isocyanatomethyl-cyclohexan (Isophoron-diisocyanat, IPDI), 1,4-Bis(isocyanatomethyl)cyclohexan und/oder 1,3-Bis(isocyanatomethyl)cyclohexan (HXDI), 2,4-Paraphenylendiisocynat (PPDI), 2,4-Tetramethylenxylendiisocyant (TMXDI), 1,6-Hexamethylen-diisocyanat (HDI), 1,4-Cyclohexan-diisocyanat, 1-Methyl-2,4- und/oder-2,6-Cyclohexan-diisocyanat und/oder 4,4'-, 2,4'- und 2,2'-Dicyclohexylmethan-diisocyanat (H12 MDI), 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), Diphenylmethandiisocyanat, 3,3'-Dimethyl-diphenyl-diisocyanat, 1,2-Diphenylethandiisocyanat und/oder Phenylendiisocyanat. Weiter bevorzugt ist das Isocyanat (a) ausgewählt aus 1,6-Hexamethylen-diisocyanat (HDI), der Mischung aus 4,4'-, 2,4'- und 2,2'-Dicyclohexylmethan-diisocyanat (H12 MDI) und/oder der Mischung aus 4,4'-, 2,4'- und 2,2'-Diphenylmethan-diisocyanat (MDI). Besonders bevorzugt wird 4,4'- Diphenylmethan-diisocyanat (MDI) eingesetzt.

In einer bevorzugten Ausführungsform liegt ein Isocyanat, bevorzugt eines der oben bevorzugt genannten Isocyanate, vor, in einer anderen bevorzugten Ausführungsform liegen mehrere, bevorzugt eine Mischung der oben als bevorzugt genannten Isocyanate vor.

Als gegenüber Isocyanaten reaktive Verbindungen (b) sind bevorzugt solche mit einem Molekulargewicht (Mn) zwischen 500 g/mol und $8 \times 10^3$ g/mol, bevorzugt zwischen $0,6 \times 10^3$ g /mol und $5 \times 10^3$ g /mol, insbesondere zwischen $0,8 \times 10^3$ g /mol und $3 \times 10^3$ g /mol. Weiter bevorzugt handelt es sich dabei um Polycarbonate, Polyesterole oder Polyetherole, die auch unter dem Begriff "Polyole" zusammengefasst werden, weiter bevorzugt sind Polycarbonate und Polyetherole, besonders bevorzugt sind Polyetherole, weiter bevorzugt solche auf der Basis von Ethylenoxid, Propylenoxid und/oder Butylenoxid, ganz besonders bevorzugt ist Polytetrahydrofuran (PTHF).

Bevorzugt haben die gegenüber Isocyanaten reaktiven Verbindungen (b), bevorzugt sind dies oben ausgeführte Polyole, eine mittlere Funktionalität zwischen 1,8 und 2,3, bevorzugt zwischen 1,9 und 2,2, insbesondere 2 und weisen weiter bevorzugt nur primäre Hydroxylgruppen auf.

Als gegenüber Isocyanaten reaktive Verbindungen (b) wird in einer bevorzugten Ausführungsform mindestens ein Polycarbonatdiol eingesetzt, bevorzugt ein aliphatisches Polycarbonatdiol. Weiter bevorzugte Polycarbonatdiole sind Polycarbonatdiole, die auf Alkandiolen basieren. Besonders geeignete Polycarbonatdiole sind streng difunktionelle OH-funktionelle Polycarbonatdiole, bevorzugt streng difunktionelle OH-funktionelle aliphatische Polycarbonatdiole. Geeignete Polycarbonatdiole basieren bevorzugt auf Butandiol, Pentandiol oder Hexandiol, insbesondere 1,4-Butandiol, 1,5-Pentandiol, 1,6-Hexandiol, 3-Methylpentan-(1,5)-diol oder Mischungen davon, besonders bevorzugt ist 1,4-Butandiol, 1,5-Pentandiol, 1,6-Hexandiol oder Mischungen davon. Bevorzugt werden Polycarbonatdiole basierend auf Butandiol und Hexandiol, Polycarbonatdiolen basierend auf Pentandiol und Hexandiol, Polycarbonatdiolen basierend auf Hexan- diol, und Mischungen aus zwei oder mehr dieser Polycarbonatdiole eingesetzt.

Vorzugsweise weisen die eingesetzten Polycarbonatdiole ein zahlenmittleres Molekulargewicht (Mn) im Bereich von 500 g/mol bis $4,0 \times 10^3$ g/mol, bestimmt über GPC, bevorzugt im Bereich von $0,65 \times 10^3$ g/mol bis $3,5 \times 10^3$ g/mol, bestimmt über GPC, besonders bevorzugt im Bereich von $0,8 \times 10^3$ g/mol bis $3,0 \times 10^3$ g/mol, bestimmt über GPC auf.

Als Kettenverlängerungsmittel (c) werden bevorzugt aliphatische, araliphatische, aromatische und/oder cycloaliphatische Verbindungen mit einem Molekulargewicht von 50 g/mol bis 499 g/mol eingesetzt, bevorzugt mit 2 mit Isocyanat reaktiven Verbindungen, die auch als funktionelle Gruppen bezeichnet werden. Bevorzugte Kettenverlängerer sind Diamine und/oder Alkandiole, weiter bevorzugt Alkandiole mit 2 bis 10 Kohlenstoffatomen, bevorzugt mit 3 bis 8 Kohlenstoffatomen im Alkylenrest, d.h. Di-, Tri-, Tetra-, Penta-, Hexa-, Hepta-, Okta-, Nona- und/oder Dekaalkylenglykole, die weiter bevorzugt nur primäre Hydroxylgruppen haben. Besonders bevorzugt ist 1,2-Ethylenglykol, 1,3-Propandiol, 1,4-Butandiol, 1,6-Hexandiol, weiter bevorzugt 1,4-Butandiol. In einer anderen bevorzugten Ausführungsform werden auch Mischungen der Kettenverlängerer eingesetzt.

In bevorzugten Ausführungsformen werden mit den Aufbaukomponenten Katalysatoren (d) eingesetzt. Dies sind insbesondere Katalysatoren, die die Reaktion zwischen den NCO-Gruppen der Isocyanate (a) und den Hydroxylgruppen der gegenüber Isocyanaten reaktiven Verbindung (b) und, sofern eingesetzt, dem Kettenverlängerungsmittel (c) beschleunigen. Bevorzugte Katalysatoren sind tertiäre Amine, insbesondere Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan. In einer anderen bevorzugten Ausführungsform sind die Katalysatoren organische Metallverbindungen wie Titansäureester, Eisenverbindungen, bevorzugt Eisen-(III)- acetylacetonat, Zinnverbindungen, bevorzugt solche von Carbonsäuren, besonders bevorzugt Zinndiacetat, Zinndioctoat, Zinndilaurat oder die Zinndialkylsalze, weiter bevorzugt Dibutylzinndiacetat, Dibutylzinndilaurat, oder Wismutsalze von Carbonsäuren, bevorzugt Wismutdecanoat und/oder Wismut(III)-neodecanoat.

Besonderes bevorzugte Katalysatoren sind: Zinndioctoat und/oder Wismut (III)-neodecanoat, die bevorzugt auch einzeln eingesetzt werden.

Die Katalysatoren (d) werden bevorzugt in Mengen von 0,0001 bis 0,1 Gew.-Teilen pro 100 Gew.-Teile der mit Isocyanten reaktiven Verbindung (b) eingesetzt. Bevorzugt werden Zinnkatayslsatoren und/oder Wismutsalze von Carbonsäuren eingesetzt, insbesondere Zinndioktoat und/oder Wismut (III) neodecanoat, die bevorzugt auch einzeln eingesetzt werden.

Neben Katalysatoren (d) können den Aufbaukomponenten (a) bis (c) bei der Herstellung des thermoplastischen TPU auch übliche Zusatz- und/oder Hilfsstoffe (e) als Einsatzstoffe hinzugefügt werden. Genannt seien beispielsweise oberflächenaktive Substanzen, Füllstoffe, Flammschutzmittel, Keimbildungsmittel, Gleit- und Entformungshilfen, Farbstoffe und Pigmente, gegebenenfalls Stabilisatoren, bevorzugt gegen Hydrolyse, Licht, Hitze, Oxidation oder Verfärbung, anorganische und/oder organische Füllstoffe, bevorzugt auch Polymere, bevorzugt Polyolefine, Polyester, Polyamid, Polyoxymethylen, Polystyrol und/oder Styrolcopolymere, Verstärkungsmittel und/oder Weichmacher.

Stabilisatoren im Sinne der vorliegenden Erfindung sind Additive, auch als Hilfs- und/oder Zusatzstoffe bezeichnet, die das thermoplastische Polyurethan und/oder die Zubereitung gegen schädliche Umwelteinflusse schützen. Beispiele sind Antioxidantien, bevorzugt sind phenolische Antioxidantien, Hindered Amine Light Stabilizer, UV-Absorber, Hydrolyseschutzmittel, Quencher und Flammschutzmittel. Beispiele für kommerzielle Stabilisatoren sind gegeben in Plastics Additive Handbook, 5th Edition, H. Zweifel, ed., Hanser Publishers, München, 2001 ([1]), S.98-8136.

In einer bevorzugten Ausführungsform weisen die UV-Absorber ein zahlenmittleres Molekulargewicht von grö-ßer als $0,3 \times 10^3$ g/mol, insbesondere größer als $0,39 \times 10^3$ g/mol, auf. Ferner sollten die bevorzugt verwendeten UV-Absorber eine Molekulargewicht von nicht größer als $5,0 \times 10^3$ g/mol, besonders bevorzugt von nicht größer als $2,0 \times 10^3$ g/mol aufweisen.

Besonders geeignet als UV-Absorber ist die Gruppe der Benzotriazole. Beispiele für besonders geeignete Benzotriazole sind Tinuvin® 213, Tinuvin® 234, Tinuvin® 571, sowie Tinuvin® 384 und das Eversorb® 82. Üblicherweise werden die UV-Absorber in Mengen von 0,01 Gew.-%, bis 5 Gew.-% bezogen auf die Gesamtmasse TPU zudosiert, bevorzugt 0, 1 Gew.-%, - 2,0 Gew.-%, insbesondere 0,2 Gew.-%, - 0,5 Gew.-%.

Oft ist eine oben beschriebene UV-Stabilisierung basierend auf einem Antioxidant und einem UV-Absorber noch nicht ausreichend, um eine gute Stabilität des erfindungsgemäßen TPU gegen den schädlichen Einfluss von UV-Strahlen zu gewährleisten. In diesem Falle kann zusätzlich zu dem Antioxidans und dem UV-Absorber noch ein Hindered-Amine Light Stabilizer (HALS) zu dem erfindungsgemäßen TPU zugegeben werden. Die Aktivität der HALS-Verbindungen beruht auf ihrer Fähigkeit, Nitroxylradikale zu bilden, die in den Mechanismus der Oxidation von Polymeren eingreift. HALS gelten als hocheffiziente UV-Stabilisatoren für die meisten Polymere.

HALS-Verbindungen sind allgemein bekannt und kommerziell erhältlich. Beispiele für kommerziell erhältliche HALS-Stabilisatoren finden sich in Plastics Additive Handbook, 5th edition, H. Zweifel, Hanser Publishers, München, 2001, S. 123-136.

Als Hindered Amine Light Stabilizer werden bevorzugt Hindered Amine Light Stabilizer genommen, bei denen das zahlenmittlere Molekulargewicht größer als $0,5 \times 10^3$ g/mol sind. Ferner sollte das Molekulargewicht der bevorzugten HALS-Verbindungen nicht größer als $10 \times 10^3$ g/mol, besonders bevorzugt nicht größer als $5,0 \times 10^3$ g/mol sein.

Besonders bevorzugte Hindered Amine Light Stabilizer sind bis-(1,2,2,6,6-pentamethylpiperidyl)sebacat (Tinuvin® 765, Ciba Spezialitatenchemie AG) und das Kondensationsprodukt aus 1-hydroxyethyl-2,2,6,6-tetramethyl-4-hydroxypiperidine und succinic acid (Tinuvin® 622). Insbesondere bevorzugt ist das Kondensationsprodukt aus 1-hydroxyethyl-2,2,6,6-tetramethyl-4-hydroxypiperidine and succinic acid (Tinuvin® 622), wenn der Titangehalt des fertigen Produktes < 150 Gewichts-ppm, bevorzugt < 50 Gewichts-ppm, insbesondere < 10 Gewichts-ppm bezogen auf die eingesetzten Aufbaukomponenten ist.

HALS Verbindungen werden bevorzugt in einer Konzentration von 0,01 Gew.-% bis 5 Gew.-% eingesetzt, besondere bevorzugt von 0,1 Gew.-% bis 1 Gew.-%, insbesondere von 0,15 Gew.-% bis 0,3 Gew.-% bezogen auf das Gesamtgewicht de eingesetzten Aufbaukomponenten.

Eine besonders bevorzugte UV Stabilisierung enthält eine Mischung aus einem phenolischen Stabilisator, einem Benzotriazol und einer HALS-Verbindung in den oben beschriebenen bevorzugten Mengen.

Nähere Angaben über die oben genannten Hilfsmittel- und Zusatzstoffe sind der Fachliteratur zu entnehmen, z.B. aus Plastics Additive Handbook, 5th edition, H. Zweifel, ed, Hanser Publishers, München, 2001.

Die Herstellung der in der Zubereitung verwendeten TPU, in einer Ausführungsform auch der Zubereitung selbst, wird bevorzugt nach den bekannten Verfahren diskontinuierlich oder kontinuierlich, beispielsweise mit Reaktionsextrudern oder dem Bandverfahren nach dem "oneshot-" oder dem Prepolymer-Verfahren, bevorzugt nach dem "one-shot"-Verfahren durchgeführt. Bei dem "one-shot-"Verfahren werden die zur Reaktion kommenden Aufbaukomponenten (a) Isocyanate und (b) mit Isocyant reaktive Verbindung, in bevorzugten Ausführungsformen auch der Kettenverlängerer (c), der Katalysator (d) und/oder die als weitere Einsatzstoffe, die Zusatz- und/oder Hilfsstoffe (e) nacheinander oder gleichzeitig miteinander vermischt, wobei die Polymerisationsreaktion unmittelbar einsetzt.

Beim Extruderverfahren werden die Aufbaukomponenten (a), (b) sowie in bevorzugten Ausführungsformen auch (c), (d) und/oder (e) einzeln oder als Gemisch in den Extruder eingeführt und, bevorzugt bei Temperaturen von 160°C bis 250°C, zur Reaktion gebracht. Das so entstehende thermoplastische Polyurethan wird extrudiert, abgekühlt und granuliert. Bevorzugt wird ein Zweiwellenextruder verwendet, da der Zweiwellenextruder praktisch drucklos arbeitet und so eine präzisere Einstellung der Temperatur auf dem Extruder möglich ist.

Weiter bevorzugt werden in einem ersten Schritt im Reaktionsgemisch nur die Komponenten (a), (b) ggf. (c) in bevorzugten Ausführungsformen in Gegenwart mindestens eines Katalysators (d) zu einem TPU ausreagiert. Dabei wird weiter bevorzugt dem Reaktionsgemisch ein Antioxidationsmittel, bevorzugt ein, wie oben ausgeführt, phenolisches Anitoxidationsmittel zugesetzt. Die weitere Bevorzugung ist wie oben beschrieben.

In bevorzugten Verfahren werden in einem ersten Schritt alle Einsatzstoffe, die zur Herstellung des TPU benötigt werden, miteinander zur Reaktion gebracht und in einem zweiten Schritt die weiteren Einsatzstoffe der Zubereitung zugemischt.

Das durch die beschriebenen Verfahren erhaltene Polyurethan wird abgekühlt und granuliert, d.h. die Zubereitung liegt bevorzugt als Granulat vor, das die Basis für die daraus hergestellten Extrusions, Pulversinter- oder Spritzguss-Teile ist

In einer bevorzugten Zubereitung 2 ist in der oben ausgeführten Zubereitung 1 oder einer ihrer bevorzugten Ausführungsformen zudem die Säurezahl der Zubereitung selbst oder in einer anderen Ausführungsform die Säurezahl der Mischung des in der Zubereitung enthaltenen thermoplastischen Polyurethans und aller enthaltenen Einsatzstoffe kleiner als 20, bevorzugt kleiner als 10, weiter bevorzugt kleiner als 5, und besonders bevorzugt kleiner als 2,5. Die Bestimmung der Gesamtsäurezahl erfolgt gemäß Beispiel 3 und 4.

Die bevorzugte Zubereitung 3 ist eine Zubereitung enthaltend A) thermoplastisches Polyurethan, das, wie oben beschrieben, zumindest aus folgenden Einsatzstoffen hergestellt ist: (a) Isocyanat, (b) eine mit Isocyanat reaktive Substanz, bevorzugt mit einem zahlenmittleren Molekulargewicht zwischen 500 g/mol bis $100 \times 10^3$ g/mol, die bevorzugt ein Polyol ist, sowie in einer bevorzugten Ausführungsform (c) Kettenverlängerer, und/oder Katalysator (d) und B) als weitere Einsatzstoffe, (e) Zusatzstoffe und/oder Hilfsstoffe, die entweder dem thermoplastischen Polyurethan bei der Herstellung zugegeben werden und somit in dem thermoplastischen Polyurethan enthalten sind und/oder in der Zubereitung zusätzlich zu dem thermoplastischen Polyurethan enthalten sind, wobei zumindest ein Einsatzstoff enthalten ist und zumindest einer der Einsatzstoffe eine Phenoxygruppe enthält und die Basenzahl der Zubereitung oder, in einer anderen bevorzugten Ausführungsform, die Basenzahl der Mischung des in der Zubereitung enthaltenen thermoplastischen Polyurethans und aller Einsatzstoffe kleiner als 2 ist, bevorzugt kleiner als 1, weiter bevorzugt kleiner als 0,5, weiter bevorzugt, kleiner als 0,3, noch weiter bevorzugt kleiner als 0,2 und ganz besonders bevorzugt kleiner als 0,15 ist. Die Basenzahl der Zubereitung des thermoplastischen Polyurethans und der weiteren in der Zubereitung enthaltenen Einsatzstoffe wird gemäß Beispiel 2 und 4 bestimmt.

Die weiter bevorzugte Zubereitung 4 enthält alle Merkmale einer der Zubereitungen 1 bis 3 oder ihrer weiter bevorzugten Ausführungsformen und die Summe der Phenolgehalte aller Einsatzstoffe, in einer anderen bevorzugten Ausführungsform die Summe des Phenolgehalts, des wie oben beschrieben hergestellten TPU und der weiteren Einsatzstoff der Zubereitung ist kleiner als 100 Gewichts-ppm, bevorzugt kleiner als 50 Gewichts-ppm, weiter bevorzugt kleiner als 20 Gewichts-ppm und besonders bevorzugt kleiner als 10 Gewichts-ppm.

Ebenfalls bevorzugt sind folgende Zubereitungen: Zubereitung 4a, die alle Merkmale der Zubereitung 1 und der Zubereitung 3 oder einer ihrer bevorzugten Ausführungsformen enthält oder Zubereitung 4b, die alle Merkmale der Zubereitung 2 und Zubereitung 3 oder einer ihrer bevorzugten Ausführungsformen enthält.

Weiter bevorzugt ist eine Zubereitung 5, die in Ergänzung der Merkmale der Zubereitungen 1 bis 4 und ihrer bevorzugten Ausführungsformen, dazu gehören auch die Zubereitungen 4a und 4b, noch eine Phenoxygruppe enthält oder ein Derivat der Phenoxygruppe, bevorzugt eine Phenoxygruppe, die über eine Esterbindung in einem der Einsatzstoffe gebunden vorliegt.

Weiter bevorzugt ist eine Zubereitung 6 die alle Merkmale der Zubereitung 5 enthält wobei die Esterbindung Teil eines organischen Phosphats und/oder eines Phosphonats ist.

Weiter bevorzugt ist eine Zubereitung 7 die alle Merkmale der Zubereitung 6 enthält wobei die Esterbindung, die Teil eines organischen Phosphats und/oder eines Phosphonats ist, in einem Zusatzstoff und/oder Hilfsstoff (e) der Zubereitung vorliegt, der weiter bevorzugt ein Flammschutzmittel ist.

Weiter bevorzugt ist eine Zubereitung 8 die alle Merkmale einer der Zubereitungen 7 oder einer ihrer bevorzugten Ausführungsformen enthält, wobei das Flammschutzmittel ausgewählt ist aus der Gruppe: isopropyliertes Triphenylphosphat (ITP), Mono-, Bis- und Tris(isopropylphenyl)phosphate unterschiedlichen Isopropylierungsggrades, Triphenylphosphat (TPP), Trikresylphosphat (TKP), Resorcinol-bis(diphenylphosphat) (RDP), Bisphenol-A-bis(diphenylphosphat) (BDP), Diphenylkresylphosphat (DPK), Diphenyl-2-ethylhexylphosphat (DPO), und/oder Xylenolresorcinol (RDXP), besonders bevorzugt ist Resorcinol-bis-(diphenylphosphate) (RDP).

Weiter bevorzugt ist die Zubereitung 9, die alle Merkmale einer der Zubereitungen 1 bis 8 enthält und zusätzlich als Zusatzstoff, Melamincyanurat enthält.

Eine besonders bevorzugte Zubereitung 10, enthält als thermoplastisches Polyurethan das Reaktionsprodukt der Einsatzstoffe Isocyanat 4,4'-, 2,4'- und/oder 2,2'-Dicyclohexylmethan-diisocyanat (MDI), besonders bevorzugt 4,4'-Dicyclohexylmethan-diisocyanat (4,4'-MDI), mit dem Polyol Polytetrahydrofuran mit einem zahlenmittleren Molekulargewicht von $1,0 \times 10^3$ g/mol, dem Kettenverlängerer 1,4-Butandiol, sowie weiterhin 10 Gew.-% bis 40 Gew.-%, 20 Gew.-% bis 35 Gew.-%, bevorzugt 22 Gew.-% bis 28 Gew.-% Melamincyanurat und 5 Gew.-% bis 20 Gew.-%, bevorzugt 5 Gew.-% bis 10 Gew.-%, weiter bevorzugt 7 bis 8 Gew.-% Resorcinol-bis-(diphenyl) phosphate (RDP), wobei die Basenzahl der Zubereitung oder der Mischung des in der Zubereitung enthaltenen thermoplastischen Polyurethans und aller enthaltenen Einsatzstoffe kleiner als 2 ist, bevorzugt kleiner als 1 und besonders bevorzugt kleiner als 0,5., weiter bevorzugt ist die Säurezahl der Zubereitung oder der Mischung des in der Zubereitung enthaltenen thermoplastischen Polyurethans und aller enthaltenen Einsatzstoffe der Zubereitung kleiner als 20, bevorzugt kleiner als 10, weiter bevorzugt kleiner als 5, und besonders bevorzugt kleiner als 2,5 ist, weiter bevorzugt ist der Phenolgehalt der Zubereitung oder die Summe der Phenolgehalte des in der Zubereitung enthaltenen thermoplastischen Polyurethans und aller weiteren Einsatzstoffe kleiner 100 Gewichts-ppm ist, bevorzugt kleiner als 50 Gewichts-ppm, weiter bevorzugt kleiner als 20 Gewichts-ppm und besonders bevorzugt kleiner als 10 Gewichts-ppm.

In einer weiter bevorzugten Zubereitung 11, die alle Merkmale der Zubereitung 10 enthält, ist zudem das Gewichtsverhältnis der Einwaage von Polytetrahydrofuran mit einem zahlenmittleren Molekulargewicht von $1,0 \times 10^3$ g/mol zu 1,4 Butandiol im Bereich von 10: 1 bis 10:1,5.

Die weiter bevorzugte Zubereitung 12 enthält alle Merkmale der Zubereitung 9, 10 oder 11 oder ihrer bevorzugten Ausführungsformen, wobei das Melamincyanurat einen Überschuss an Melamin von weniger als 1 Gew.-%, bevorzugt weniger als 0,5 Gew.-%, weiter bevorzugt weniger als 0,25 Gew.-% und besonders bevorzugt weniger als 0,1 Gew.-% bezogen auf die Gesamtmenge eingesetzten Melamincyanurats enthält und der Überschuss an Cyanursäure weniger als 1 Gew.-%, bevorzugt weniger als 0,5 Gew.-%, weiter bevorzugt weniger als 0,3 Gew.-% und besonders bevorzugt weniger als 0, 15 Gew% betragt bezogen auf die Gesamtmenge eingesetzten Melamincyanurats.

Eine weitere bevorzugte Zubereitung 13 enthält alle Merkmale einer der vorangegangenen Zubereitungen 1 bis 12 oder ihrer bevorzugten Ausführungsformen wobei die mit Isocyanaten reaktive Substanz ein Polyether und/oder ein Polycarbonat ist, bevorzugt ein Polyether. Die weiter bevorzugte Zubereitung 14, die alle Merkmale der Zubereitung 13 umfasst, enthält als Polyether Polytetrahydrofuran (PTHF). In einer weiter bevorzugten Zubereitung 15, die alle Merkmale der Zubereitungen 14 enthält, ist das zahlenmittlere Molekulargewicht des Polytetrahydrofuran (PTHF) zwischen $0,5 \times 10^3$ g/Mol und $5 \times 10^3$ g/Mol, bevorzugt zwischen $0,6 \times 10^3$ g/Mol und $2,2 \times 10^3$ g/Mol, weiter bevorzugt zwischen $0,8 \times 10^3$ g/Mol und $1,5 \times 10^3$ g/Mol, und besonders bevorzugt beträgt das zahlenmittlere Molekulargewicht $1,0 \times 10^3$ g/Mol.

In einer bevorzugten Zubereitung 16, die alle Merkmale einer der vorhergehenden Zubereitungen umfasst sind 35 Gew.-% bis 85 Gew.-% thermoplastisches Polyurethan enthalten, weiter bevorzugt 50 Gew.-% bis 75 Gew.-%, und ganz besonders bevorzugt, 65 Gew.-% bis 70 Gew.%. Die Gewichtsangabe Gew.-% bezieht sich auf das Gesamtgewicht der Zubereitung. Eine bevorzugte Zubereitung 17, die alle Merkmale einer der Zubereitungen 1 bis 16 oder eine ihrer bevorzugten Ausführungsformen umfasst, enthält einen Ester oder einen Polyester oder steht in direktem Kontakt mit einem Polyester. Diese Zubereitung und das direktem mit ihr in Kontakt stehende Polyester werden auch als Komposit bezeichnet. Dabei ist in dem Komposit die Zubereitung bevorzugt räumlich getrennt von dem Polyester. In einer bevorzugten Ausführungsform liegt das Polyester getrennt von der Zubereitung vor, hat aber zumindest eine gemeinsame Kontaktfläche mit der Zubereitung. Weiter bevorzugt handelt es sich bei dem Komposit um Schichten von Polyester einerseits und der Zubereitung andererseits. In eine besonders bevorzugen Ausführungsform sind die Zubereitung und der Polyester zu zwei Schlauchen ausgeformt wobei die Innen- oder Auenseite des einen Schlauches mit der Innen- oder Aussenseite des zweiten Schlauchen in Kontakt steht.

In einer bevorzugten Zubereitung 18 die alle Merkmale einer der Zubereitungen 1 bis 17 oder ihrer bevorzugten Ausführungsformen enthält, hat die Zubereitung eine Shore Harte von 87-91A und eine Zugfestigkeit von mindestens 25 MPa.

Eine weitere bevorzugte Zubereitung 19 enthält alle Merkmale einer der Zubereitungen 1 bis 18 oder einer der jeweils bevorzugten Ausführungsformen und ist weiter dadurch gekennzeichnet, dass der Gesamtwassergehalt aller Einsatzstoffe weniger als 0,1 Gew-%, bevorzugt weniger als 0,05 Gew.-% und besonders bevorzugt weniger als 0,02 Gew.-% ist. Der Wassergehalt sollte bereits in den Einsatzstoffen so gering sein, um unerwünschte Nebenprodukte, Kettenabbruch, Hydrolyse oder auch schlechtere mechanische Eigenschaft zu verhindern. Der Wassergehalt der Mischungen wird nach DIN EN ISO 15512, Verfahren B, bestimmt. Um den Wassergehalt in den Zubereitungen gering zu halten wird das thermoplastische Polyurethan bzw. die damit hergestellten Zubereitungen bevorzugt mindesten 20 Stunden bei 80 °C getrocknet.

Die Shore-Harten werden bei dieser Erfindung nach DIN ISO 7619-1 bestimmt, die Zugfestigkeit nach DIN 53504. Der Phenolgehalt wird gemäß Beispiel 5 bestimmt.

Ein weiterer Erfindungsgegenstand ist ein Verfahren 1 zur Herstellung einer der Zubereitungen 1 bis 20 oder einer der jeweils bevorzugten Ausführungsformen bei dem die Einsatzstoffe bei einer Temperatur zwischen 160 °C und 250 °C zu der Zubereitung verarbeitet werden.

Weiter bevorzugt ist ein Verfahren, das die Merkmale des Verfahrens 1 enthält wobei die Summe der Phenolgehalte der verwendeten Einsatzstoffe der Zubereitung geringer als 100 Gewichts-ppm ist, bevorzugt geringer als 50 Gewichts-ppm, weiter bevorzugt geringer als 20 Gewichts-ppm und besonders bevorzugt geringer als 10 Gewichts-ppm, wobei der Gehalt sich auf das Gesamtgewicht aller Einsatzstoffe in der Zubereitung bezieht

Weiter bevorzugt ist ein Verfahren 3, das alle Verfahrensschritte des Verfahrens 1 oder 2 enthält wobei der Gehalt an Phenol in der Zubereitung unmittelbar nach der Herstellung geringer als 100 Gewichts-ppm ist, bevorzugt geringer als 50 Gewichts-ppm, weiter bevorzugt geringer als 20 Gewichts-ppm und besonders bevorzugt geringer als 10 Gewichts-ppm wobei sich der Phenol-Gehalt auf das Gesamtgewicht der Zubereitung bezieht.

Ein weiterer Erfindungsgegenstand ist ein Extrusion-, Pulversinter- und/oder Spritzguss-Teil, das aus einer der Zubereitungen 1 bis 20 oder einer der jeweils bevorzugten Ausführungsformen hergestellt wurde.

In einer weiter bevorzugten Ausführungsform steht dieses Extrusion-, Pulversinter und/oder Spritzguss-Teil, das aus einer der Zubereitungen 1 bis 20 hergestellt wurde, in unmittelbarem Kontakt mit einem Polyester.

Bevorzugt sind diese Extrusion-, Pulversinter- und/oder Spritzguss-Teile ausgewählt aus der Gruppe: Beschichtung, Dämpfungselement, Faltenbalg, Folie, Faser, Formkörper, Fußboden für Gebäude und Transport, non-woven Gewebe, Dichtung, Rolle, Schuhsohle, Schlauch, Kabel, Kabelstecker, Kabelummantelung, Kissen, Laminat, Profil, Riemen, Sattel, Schaum, durch zu- sätzliches Schäumen der Zubereitung, Steckverbindung, Schleppkabel, Solarmodul, Verkleidung in Automobilen, Wischerblatt, Modifizierer für thermoplastische Materialien, d.h. Substanz die die Eigenschaften eines anderen Materials beeinflusst. Jede dieser Verwendungen für sich genommen ist eine bevorzugte Ausführungsform, die auch als Anwendung bezeichnet wird. Eine bevorzugte Gruppe der Anwendungen ist Kabel, Kabelstecker, Kabelummantelung. Die Extrusion-, Pulversinter- und/oder Spritzguss-Teile werden, wie der Name sagt, bevorzugt durch Spritzguss, Kalandrieren, Pulversintern oder Extrusion hergestellt.

Ebenfalls ein Erfindungsgegenstand ist die Verwendung des Extrusions-, Pulversinter- und/oder Spritzguss-Teils für Anwendungen bei denen das Teil in direktem Kontakt mit einem Polyester steht.

Die folgenden Beispiele unterstreichen den Erfindungsgegenstand, sie sind in keiner Weise einschränkend für den Erfindungsgegenstand zu sehen.


Beispiele


Beispiel 1 Einsatzstoffe

TPU 1: thermoplastisches Polyurethan TPU der Shore Harte 85A, basiert auf Polytetrahydrofuranpolyol (PTHF) mit einem zahlenmittleren Molekulargewicht von 1000 g/mol, 1,4-Butandiol, Diphenylmethan-diisocyanat (MDI), Phenolgehalt < 1 Gew.-ppm.

Melapur MC 15 ED: Melamincyanurat (1,3,5-Triazin-2,4,6(1H,3H,5H)-trion, Verbindung mit 1,3,5-Triazin-2,4,6-triamin (1:1)), CAS #: 37640-57-6, BASF SE, 67056 Ludwigshafen, GERMANY, Partikelgröße D99% </= 50 $\mu$m, D50%<= 4,5 $\mu$m, Wassergehalt % (w/w) < 0,2, Phenolgehalt < 1 Gew.-ppm.

Fyrolflex RDP: Resorcinol bis (diphenyl phosphat), CAS #: 125997-21-9, Supresta Netherlands B.V., Office Park De Hoef, Hoefseweg 1, 3821 AE Amersfoort, The Netherlands, Viskosität bei 25°C = 700 mPas, Säurezahl < 0,1 mg KOH/g, Wassergehalt % (w/w) < 0, 1, Phenolgehalt < 100 Gew.-ppm.

Melamin: 1,3,5-Triazine-2,4,6-triamine, CAS #: 108-78-1, Sigma-Aldrich Chemie GmbH, Riedstrasse 2, D-89555 Steinheim, 99%, Phenolgehalt < 1 Gew.-ppm.

Cyanursäure: 1,3,5-Triazine-2,4,6-triol, CAS #: 108-80-5, Sigma-Aldrich Chemie GmbH, Riedstrasse 2, D-89555 Steinheim, 98%, Phenolgehalt < 1 Gew.-ppm.

Calciumhydroxid: CAS #: 1305-62-0, Sigma-Aldrich Chemie GmbH, Riedstrasse 2, D-89555 Steinheim p.a. > 96%, Phenolgehalt < 1 Gew.-ppm.

p-Toluensulfonsäure: p-Toluenesulfonic acid monohydrate, CAS #: 6192-52-5, Sigma-Aldrich Chemie GmbH, Riedstrasse 2, D-89555 Steinheim, > 98,5%, Phenolgehalt < 1 Gew.-ppm.

Citronensäure: CAS #: 77-92-9, Sigma-Aldrich Chemie GmbH, Riedstrasse 2, D-89555 Steinheim, >99,5%, Phenolgehalt < 1 Gew.-ppm.

Beispiel 2) Bestimmung der Aminzahl (auch Basezahl genannt)

Ca. 1g, genau gewogen, der Zubereitung alternativ des in der Zubereitung eingesetzten TPU enthaltend die für die Herstellung des TPU verwendeten Einsatzstoffe (a), (b), sofern bei der Herstellung des TPU eingesetzt auch die Einsatzstoffe (c) (d), und (e) werden mit den sonstigen Einsatzstoffen der Zubereitung d.h. sonstige Hilfs- und/oder Zusatzstoffe (e), sofern nicht bereits im TPU enthalten, die der Zubereitung erst nach Herstellung des TPU zugegeben werden, in dem durch die Rezeptur vorgegebenen Verhältnis in 100,0 ml DMF (Lösungsmittel) unter Rühren 24 Stunden bei 25 °C gelöst bzw. suspendiert. Dann werden der Lösung 10,0 ml Wasser sowie 3 Tropfen Bromcresylblau zugegeben (1 Gew% in Methanol) und anschließend wird mit 0, 1 N butanolischer Salzsäure bis zum Umschlagspunkt titriert. In gleicher Weise wird das Lösungsmittel mit dem Wasser und dem Bromcresylblau als Blindversuch bestimmt.

Beispiel 3) Bestimmung der Säurezahl

Ca. 1g, genau gewogen, der Zubereitung alternativ des in der Zubereitung eingesetzten TPU enthaltend die für die Herstellung des TPU verwendeten Einsatzstoffe (a), (b), sofern bei der Herstellung des TPU eingesetzt auch die Einsatzstoffe (c), (d) und (e) werden mit den sonstigen Einsatzstoffen der Zubereitung, sofern nicht bereits im TPU enthalten, die der Zubereitung erst nach Herstellung des TPU zugegeben werden, in dem durch die Rezeptur vorgegebenen Verhältnis in 100,0 ml DMF (Lösungsmittel) unter Rühren 24 Stunden bei 25 °C gelöst bzw. suspendiert. Dann werden der Losung 10,0 ml Wasser sowie 3 Tropfen Phenolphthalein zugegeben (1 Gew% in Methanol).

Nun wird mit 0, 1 N ethanolischer Kalilauge bis zum Umschlagspunkt titriert. In gleicher Weise wird das Lösungsmittel mit dem Wasser und dem Phenolphthalein als Blindversuch bestimmt.

Beispiel 4) Berechnung der Aminzahl (Basenzahl) und der Säurezahl

Es werden die zugehörigen Verbrauche bestimmt. Der Reagenzverbrauch der Analyse geht als A, der des Blindversuchs als B in die Berechnung ein.

E = Einwaage in [g]

$$\text{Säurezahl} = (5{,}6 \times (A - B))/E$$

$$\text{Aminzahl} = (5{,}6 \times (A - B))/E$$

Ausführliche Herleitung der Berechnungsformel:

$$(56\ [\text{mg/mmol}] \times 0{,}1\ [\text{mmol/ml}] \times (A\ [\text{ml}] - B\ [\text{ml}]))/E\ [\text{g}]$$

Sowohl Aminzahl als auch Säurezahl werden angegeben in mg KOH/g.

Beispiel 5: Bestimmung des Phenolgehaltes.

Die Methode beruht auf einer Analysenmethode des Verbands der deutschen Automobilindustrie (VDA 278), wurde aber auf den schnellen Phenolnachweis optimiert. Das Phenol (und andere flüchtige Stoffe) werden mittels Thermodesorption (60 min bei 120 °C I Heliumstrom - gemäß VDA278-FOG-Bedingungen) aus dem Polymer verdampft und durch Kryofokussierung gesammelt. Anschließend erfolgt gaschromatographische Trennung und Detektion des Phenols mittels Massenspektrometer. Die Mengen werden mit dem Gaschromatogramm bestimmt, wobei das Phenol, gelöst in Methanol, als externer Standard verwendet wurde.

Beispiel 6: Bestimmung des Wassergehaltes

Der Wassergehalt der Mischungen wurde nach DIN EN ISO 15512 Verfahren B bestimmt. Wasser ist kein ausgewiesener Einsatzstoff der Zubereitung, sondern in den Einsatzstoffen enthalten. Ein möglichst geringer Wert in der Zubereitung ist anzustreben.

Beispiel 7: Herstellung der Zubereitungen enthaltend TPU 1.

In den nachfolgenden Tabellen werden Zusammensetzungen aufgeführt, in denen das verwendete TPU 1 und die Einsatzstoffe in Gewichtsanteilen (GT) angegeben sind. Die homogenen Mischungen wurden jeweils mit einem Doppelwellenextruder Typ ZE 40 A der Fa. Berstorff mit einer Verfahrensteillänge von 35 D unterteilt in 10 Gehäuse hergestellt.
Dabei wurde der Extrudierprozess so gestaltet, dass das TPU zunächst durch geeignete Knet- und Mischelemente aufgeschmolzen und dann die zusätzlichen Einsatzstoffe zur TPU Schmelze hinzugegeben wurden.
Der Durchsatz betrug jeweils 30 kg/h. Die Extruderdrehzahl betrug 160 rpm. Die Zonentemperaturen betrugen Z1 199°C, Z2 199°C, Z3 207°C, Z4 190°C, Z5 187°C, Z6 190 °C, Z7 189°C, Z8 190°C, Z9 190°C, Z10 194°C, Lochplatte 195°C.
Zur Bestimmung der Amin- oder Säurezahl bzw. des Phenolgehaltes wurde das Granulat der Zubereitung nach einer an den Extrudierprozess angeschlossenen Unterwassergranulierung und Trocknung bei 80°C für 20h verwendet.

Beispiel 8:

| Material ( * ist erfindungsgemäß ) | 1* | 2* | 3* | 4* |
|---|---|---|---|---|
| Aminzahl der Mischung des TPU und der Einsatzstoffe | 0,4 | 0,4 | 0,4 | 0,4 |
| Aminzahl der Zubereitung | 0,4 | 0,4 | 0,4 | 0,4 |
| Wassergehalt des TPU und der Mischung aller Einsatzstoffe in Gew % | 0,01 | 0,1 | 0,18 | 0,66 |
| TPU 1 | 67,50 | 67,50 | 67,50 | 67,50 |
| Melamincyanurat 15 ED | 25,00 | 25,00 | 25,00 | 25,00 |
| Fyrolflex RDP | 7,50 | 7,50 | 7,50 | 7,50 |
| Phenol-Gehalt [Gew.-ppm] Zubereitung getrocknet | 8 | 8 | 8 | 9 |

Es wurde gezeigt, dass bei Aminzahlen von weniger als 0,5 Phenolgehalte von kleiner 10 ppm erhalten werden. Auch hohe Wassergehalte erhöhen den Phenolgehalt nicht maßgeblich.

Beispiel 9: Melamin

| Material ( * ist erfindungsgemäß ) | 5* | 6* | 7 | 8* | 9* |
|---|---|---|---|---|---|
| Aminzahl der Mischung des TPU und der Einsatzstoffe | 4,67 | 4,67 | 4,67 | 2,34 | 1,17 |
| Aminzahl der Zubereitung | 4,67 | 4,67 | 4,67 | 2,34 | 1,17 |
| Wassergehalt der Mischung des TPU und aller Einsatzstoffe in Gew % | 0,01 | 0,1 | 0,18 | 0,18 | 0,18 |
| TPU 1 | 66,80 | 66,80 | 66,80 | 67,30 | 67,55 |
| Melamincyanurat 15 ED | 24,80 | 24,80 | 24,80 | 24,80 | 24,80 |

(fortgesetzt)

| Material ( * ist erfindungsgemäß ) | 5* | 6* | 7 | 8* | 9* |
|---|---|---|---|---|---|
| Fyrolflex RDP | 7,40 | 7,40 | 7,40 | 7,40 | 7,40 |
| Melamin | 1,00 | 1,00 | 1,00 | 0,50 | 0,25 |
| Phenol-Gehalt [Gew.-ppm] der Zubereitung, getrocknet | 40 | 44 | 118 | 58 | 18 |

Es wurde gezeigt, dass bei Aminzahlen > 0,5 Phenolgehalte von größer 10 ppm bestimmt werden. Die Phenolgehalte sind auch vom Wassergehalt der Mischung abhängig.

Beispiel 10: Melamin

| Material ( * ist erfindungsgemäß ) | 10* | 11 | 12 | 13 |
|---|---|---|---|---|
| Aminzahl der Mischung des TPU und der Einsatzstoffe | 4,67 | 4,67 | 4,67 | 4,67 |
| Aminzahl der Zubereitung | 4,67 | 4,67 | 4,67 | 4,67 |
| Wassergehalt der Mischung des TPU und aller Einsatzstoffe in Gew % | 0,37 | 0,37 | 0,37 | 0,37 |
| TPU 1 | 84,00 | 54,00 | 49,00 | 69,00 |
| Melamincyanurat 15 ED | 10,00 | 40,00 | 40,00 | 10,00 |
| Fyrolflex RDP | 5,00 | 5,00 | 10,00 | 20,00 |
| Melamin | 1,00 | 1,00 | 1,00 | 1,00 |
| Phenol-Gehalt [Gew.-ppm] der Zubereitung getrocknet | 86 | 113 | 189 | 240 |

Es wurde gezeigt, dass bei Aminzahlen > 0,5 Phenolgehalte von größer 10 ppm bestimmt werden. Die Phenolgehalte sind auch von der Menge des Phosphorsäureesters abhängig.

Beispiel 11: Cyanursäure

| Material ( * ist erfindungsgemäß) | 15* | 16* | 17* | 18* |
|---|---|---|---|---|
| Säurezahl der Mischung des TPU und der Einsatzstoffe | 4,27 | 4,27 | 4,27 | 2,14 |
| Säurezahl der Zubereitung | 4,27 | 4,27 | 4,27 | 2,14 |
| Wassergehalt der Mischung des TPU und aller Einsatzstoffe in Gew % | 0,01 | 0,55 | 1,1 | 1,1 |
| TPU 1 | 66,80 | 66,80 | 66,80 | 67,30 |
| Melamincyanurat 15 ED | 24,80 | 24,80 | 24,80 | 24,80 |
| Fyrolflex RDP | 7,40 | 7,40 | 7,40 | 7,40 |
| Cyanuräure | 1,00 | 1,00 | 1,00 | 0,50 |
| Phenol-Gehalt [Gew.-ppm] der Zubereitung getrocknet | 10 | 11 | 17 | 17 |

Es wurde gezeigt, dass hohe Säurezahlen und Wassergehalte nur zu relativ geringen Phenolgehalten führen.

Beispiel 12: Cyanursäure

| Material ( * ist erfindungsgemäß ) | 19* | 20* | 21* | 22* |
|---|---|---|---|---|
| Säurezahl der Mischung des TPU und der Einsatzstoffe | 4,27 | 4,27 | 4,27 | 4,27 |
| Säurezahl der Zubereitung | 4,27 | 4,27 | 4,27 | 4,27 |
| Wassergehalt der Mischung des TPU und aller Einsatzstoffe in Gew % | 0,55 | 0,55 | 0,55 | 0,55 |
| TPU 1 | 84,00 | 54,00 | 49,00 | 69,00 |
| Melamincyanurat 15 ED | 10,00 | 40,00 | 40,00 | 10,00 |
| Fyrolflex RDP | 5,00 | 5,00 | 10,00 | 20,00 |
| Cyanuräure | 1,00 | 1,00 | 1,00 | 1,00 |
| Phenol-Gehalt [Gew.-ppm] der Zubereitung, getrocknet | 7 | 7 | 14 | 19 |

Es wurde gezeigt, dass hohe Säurezahlen und Wassergehalte nur zu relativ geringen Phenolgehalten führen.

Beispiel 13: Calciumhydroxid

| Material ( * ist erfindungsgemäß ) | 23* | 24* | 25* |
|---|---|---|---|
| Aminzahl der Mischung des TPU und der Einsatzstoffe | 14,4 | 7,2 | 3,6 |
| Aminzahl der Zubereitung | 14,4 | 7,2 | 3,6 |
| Wassergehalt der Mischung des TPU und aller Einsatzstoffe in Gew % | 0,66 | 0,66 | 0,66 |
| TPU 1 | 66,80 | 67,30 | 67,55 |
| Melamincyanurat 15 ED | 24,80 | 24,80 | 24,80 |
| Fyrolflex RDP | 7,40 | 7,40 | 7,40 |
| Calciumhydroxid | 1,00 | 0,50 | 0,25 |
| Phenol-Gehalt [Gew.-ppm] der Zubereitung, getrocknet | 98 | 91 | 78 |

Es wurde gezeigt, dass hohe Aminzahlen zu hohen Phenolgehalten führen

Beispiel 14: Citronensäure und p-Toluolsulfonsäure

| Material ( * ist erfindungsgemäß ) | 26* | 27* | 28* | 29* |
|---|---|---|---|---|
| Säurezahl der Mischung des TPU und der Einsatzstoffe | 2,74 | 0,68 | 8,49 | 2,12 |
| Saurezahl der Zubereitung | 2,74 | 0,68 | 8,49 | 2,12 |
| Wassergehalt der Mischung des TPU und aller Einsatzstoffe in Gew % | 0,1 | 0,1 | 0,55 | 0,55 |
| TPU 1 | 66,80 | 67,55 | 66,80 | 67,55 |
| Melamincyanurat 15 ED | 24,80 | 24,80 | 24,80 | 24,80 |
| Fyrolflex RDP | 7,40 | 7,40 | 7,40 | 7,40 |
| p-Toluensulfonsäure | 1,00 | 0,25 | | |
| Citronensäure | | | 1,00 | 0,25 |
| Phenol-Gehalt [Gew.-ppm] der Zubereitung, getrocknet | 14 | 13 | 18 | 16 |

Es wurde gezeigt, dass hohe Säurezahlen und für thermoplastische Polyurethane sehr hohe Wassergehalte, d.h > 0,05 Gew.-% nur zu relativ geringen Phenolgehalt-Anstiegen führen, verglichen mit thermoplastischen Polyurethanen mit hoher Aminzahl und hohem Wassergehalt.

Beispiel 15: Bestimmung des gewichtsmittleren Molekulargewichts (Mw)

Die Probe wird 1%ig in (Dimethylformamid + 0,1% Dibutylamin) gelöst und anschließend mittels eines $0,45\mu$m PTFE-Filter filtriert. Für die GPC Messung wurden folgende Parameter eingestellt:
Zwei hintereinandergeschaltete GPC-Säulen: PSS-Gel,100A; $5\mu$m, 300*8mm; Jordi- Gel DVB, MixedBed, $5\mu$m; 250*10mm; Säulentemperatur 60°C; Fluss 1 ml/min; RI-Detektor. Dabei erfolgt die Kalibrierung mit Polymethylmethacrylat (EasyCal; Fa. PSS, Mainz), als Laufmittel wird Dimethylformamid verwendet.
Die Auswertung zur Bestimmung des gewichtsmittleren Molekulargewichtes erfolgt gemäß z.B. Encyclopedic Dictionary of Polymers, Band 1, Jan W. Gooch, Springer, 06.11.2010

Beispiel 16- Bestimmung des zahlenmittleren Molekulargewichts

Die Probe wird ca. 1%ig in (Dimethylformamid + 0,1% Dibutylamin) gelost und anschließend mittels eines $0,45\mu$m PTFE-Filter filtriert. Für die GPC Messung wurden folgende Parameter eingestellt:

Vier hintereinander geschaltete GPC-Saulen:2x PSS_SDV500 300*8mm,$5\mu$m;
PSS_SDV100, 300*8mm,$5\mu$m; PSS_SDV50 300*8mm,$5\mu$m; Säulentemperatur 35°C;
Fluß 1,5 ml/min; RI-Detektor. Dabei erfolgt die Kalibrierung der Basis des Polyols entsprchend. PEG-Ether mit PEG Kalibratoren; PPG mit PPG-Homologen; PTHF-Ether mit den Homologen von PTHF; Adipates ter mit den Homologen von Polybutandioladipat. Restliche Polyole werden über die Homologen von PMMA kalibriert.

Die Auswertung zur Bestimmung des zahlenmittleren Molekulargewichtes erfolgt gemäß z.B. Encyclopedic Dictionary of Polymers, Band 1, Jan W. Gooch, Springer, 06.11.2010

**Patentansprüche**

1.  Zubereitung enthaltend :

    A) thermoplastisches Polyurethan, das zumindest aus folgenden Einsatzstoffen hergestellt ist: (a) Isocyanat, (b) eine mit Isocyanat reaktive Substanz, bevorzugt mit einem zahlenmittleren Molekulargewicht zwischen 500 g/mol bis $100 \times 10^3$ g /mol, die bevorzugt ein Polyol ist, sowie bevorzugt (c) Kettenverlängerer und/oder(d) Katalysator,
    B) als weitere Einsatzstoffe (e) Zusatz und/oder Hilfsstoffe, die entweder dem thermoplastischen Polyurethan bei der Herstellung zugegeben werden und somit in dem thermoplastischen Polyurethan enthalten sind und/oder in der Zubereitung zusätzlich zu dem thermoplastischen Polyurethan enthalten sind, wobei zumindest einer der Einsatzstoffe eine Phenoxygruppe oder ein Derivat der Phenoxygruppe, bevorzugt eine Phenoxygruppe enthält, **dadurch gekennzeichnet, dass** der Phenolgehalt der Zubereitung oder die Summe der Phenolgehalte des in der Zubereitung enthaltenen thermoplastischen Polyurethans und aller weiteren Einsatzstoffe kleiner 100 Gewichts-ppm ist, bevorzugt kleiner als 50 Gewichts-ppm, weiter bevorzugt kleiner als 20 Gewichts-ppm und besonders bevorzugt kleiner als 10 Gewichts-ppm,
    wobei als weiterer Hilfs- und/oder Zusatzstoff (e) Melamincyanurat enthalten ist und das Melamincyanurat einen Überschuss an Melamin von weniger als 1 Gew.-%, bevorzugt weniger als 0,5 Gew.-%, weiter bevorzugt weniger als 0,25 Gew.-% und besonders bevorzugt weniger als 0, 1 Gew.-% enthält und der Überschuss an Cyanursäure weniger als 1 Gew.-%, bevorzugt weniger als 0,5 Gew.-%, weiter bevorzugt weniger als 0,3 Gew.-% und besonders bevorzugt weniger als 0, 15 Gew% beträgt.

2.  Zubereitung nach vorherigem Anspruch, **dadurch gekennzeichnet, dass** die Säurezahl der Zubereitung oder die Säurezahl der Mischung des in der Zubereitung enthaltenen thermoplastischen Polyurethans und aller enthaltenen Einsatzstoffe der Zubereitung kleiner als 20, bevorzugt kleiner als 10, weiter bevorzugt kleiner als 5, und besonders bevorzugt kleiner als 2,5 ist.

3.  Zubereitung nach einem der vorherigen Ansprüche, **dadurch gekennzeichnet, dass** die Basenzahl der Zubereitung oder die Basenzahl der Mischung des in der Zubereitung enthaltenen thermoplastischen Polyurethans und aller enthaltenen Einsatzstoffe kleiner als 2 ist, bevorzugt kleiner als 1 und besonders bevorzugt kleiner als 0,5.

4. Zubereitung nach einem der vorherigen Ansprüche, **dadurch gekennzeichnet, dass** die Phenoxygruppe oder ein Derivat der Phenoxygruppe, bevorzugt die Phenoxygruppe über eine Esterbindung gebunden in einem Einsatzstoff vorliegt.

5. Zubereitung nach dem vorherigen Anspruch, **dadurch gekennzeichnet, dass** die Esterbindung Teil eines organischen Phosphats und/oder eines Phosphonats ist.

6. Zubereitung nach einem der vorherigen Ansprüche, **dadurch gekennzeichnet, dass** die Phenoxygruppe oder ein Derivat der Phenoxygruppe Bestandteil eines Hilfs- und/oder Zusatzstoffes (e) ist, der bevorzugt ein Flammschutzmittel ist, weiter bevorzugt ist das Flammschutzmittel ausgewählt aus isopropyliertes Triphenylphosphat (ITP), Mono-, Bis- und Tris(isopropylphenyl)phosphate unterschiedlichen Isopropylierungsgrades, Triphenylphosphat (TPP), Trikresylphosphat (TKP), Resorcinol-bis(diphenylphosphat) (RDP), Biphenol-A-bis(diphenylphosphat) (BDP), Diphenylkresylphosphat (DPK), Diphenyl-2-ethylhexylphosphat (DPO), und/oder Xylenolresorcinol (RDXP) ist, besonders bevorzugt ist Resorcinol-bis-(diphenyl phosphate) (RDP).

7. Zubereitung nach einem der vorherigen Ansprüche, **dadurch gekennzeichnet, dass** die mit Isocyanaten reaktive Substanz ein Polyether und/oder ein Polycarbonat ist, bevorzugt ein Polyether.

8. Zubereitung nach dem vorherigen Anspruch, **dadurch gekennzeichnet, dass** der Polyether Polytetrahydrofuran (PTHF) ist.

9. Zubereitung nach dem vorherigen Anspruch **dadurch gekennzeichnet, dass** das zahlenmittlere Molekulargewicht des Polytetrahydrofuran (PTHF) zwischen $0,5 \times 10^3$ g/Mol und $5 \times 10^3$ g/Mol liegt, bevorzugt zwischen $0,6 \times 10^3$ g/Mol und $2,2 \times 10^3$ g/Mol, weiter bevorzugt zwischen $0,8 \times 10^3$ g/Mol und $1,5 \times 10^3$ g/Mol, und besonders bevorzugt $1,0 \times 10^3$ g/Mol ist.

10. Zubereitung nach einem der vorherigen Ansprüche, **dadurch gekennzeichnet, dass** der Gesamtwassergehalt aller Einsatzstoffe weniger als 0,1 Gew.-%, bevorzugt weniger als 0,05 Gew.-% und besonders bevorzugt weniger als 0,02 Gew.-% bezogen auf das Gesamtgewicht aller Einsatzstoffe in der Zubereitung ist.

11. Zubereitung nach einem der vorherigen Ansprüche, **dadurch gekennzeichnet, dass** die Zubereitung als Hilfs- und/oder Zusatzstoff (e) einen Polyester enthält.

12. Komposit **dadurch gekennzeichnet, dass** das Komposit neben einer Zubereitung nach einem der vorherigen Ansprüche noch ein Polyester enthält.

13. Verfahren zur Herstellung der Zubereitung nach einem der vorherigen Ansprüche, **dadurch gekennzeichnet, dass** die Einsatzstoffe bei Temperaturen zwischen 160 °C und 250 °C zu der Zubereitung verarbeitet werden.

14. Verfahren zur Herstellung der Zubereitung nach dem vorherigen Anspruch, **dadurch gekennzeichnet, dass** die Summe der Phenol-Gehalte der verwendeten Einsatzstoffe geringer als 100 Gewichts ppm ist, bevorzugt geringer als 50 Gewichts-ppm, weiter bevorzugt geringer als 20 Gewichts-ppm und besonders bevorzugt geringer als 10 Gewichts-ppm, wobei der Gehalt sich auf das Gesamtgewicht aller Einsatzstoffe bezieht.

15. Verfahren nach dem vorherigen Anspruch, **dadurch gekennzeichnet, dass** der Gehalt an Phenol in der Zubereitung unmittelbar nach der Herstellung geringer als 100 Gewichts-ppm ist, bevorzugt geringer als 50 Gewichts-ppm, weiter bevorzugt geringer als 20 Gewichts-ppm und besonders bevorzugt geringer als 10 Gewichts-ppm, wobei der Gehalt an Phenol sich auf das Gesamtgewicht der Zubereitung bezieht.

16. Extrusion-, Pulversinter- und/oder Spritzguss-Teil hergestellt aus einer Zubereitung gemäß einem der Ansprüche 1 bis 11.

17. Verwendung eines Teiles nach dem vorherigen Anspruch für Anwendungen bei denen das Teil in direktem Kontakt mit einem Polyester steht.

**IN DER BESCHREIBUNG AUFGEFÜHRTE DOKUMENTE**

**In der Beschreibung aufgeführte Patentdokumente**

- EP 0617079 B1
- WO 03099896 A

**In der Beschreibung aufgeführte Nicht-Patentliteratur**

- Standard for Tests for Flammability of Plastic Materials for Parts in Devices and Appliances. 29. Oktober 1996
- Stabilisatoren sind gegeben in Plastics Additive Handbook. Hanser Publishers, 2001, 98-8136
- Plastics Additive Handbook. Hanser Publishers, 2001, 123-136
- Plastics Additive Handbook. Hanser Publishers, 2001
- *CHEMICAL ABSTRACTS,* 37640-57-6
- *CHEMICAL ABSTRACTS,* 125997-21-9
- *CHEMICAL ABSTRACTS,* 108-78-1
- *CHEMICAL ABSTRACTS,* 108-80-5
- *CHEMICAL ABSTRACTS,* 1305-62-0
- *CHEMICAL ABSTRACTS,* 6192-52-5
- *CHEMICAL ABSTRACTS,* 77-92-9
- **JAN W. GOOCH.** Molekulargewichtes erfolgt gemäß z.B. Encyclopedic Dictionary of Polymers. Springer, 06. November 2010
- **JAN W. GOOCH.** Encyclopedic Dictionary of Polymers. Springer, 11. Juni 2010